# EUROPÄISCHE PATENTSCHRIFT

(11) **EP 0 720 423 B1**
(45) Veröffentlichungstag und Bekanntmachung des Hinweises auf die Patenterteilung: **12.07.2000**
(21) Anmeldenummer: 94928380.8
(22) Anmeldetag: 20.09.1994
(51) Int. Cl.: A01D 34/84

(54) **RASENTRIMMER**
GRASS MOWER
TONDEUSE A GAZON

(30) Priorität: 21.09.1993 CH 283993
(43) Veröffentlichungstag der Anmeldung: 10.07.1996
(73) Patentinhaber: POSCH, Leopold, 3200 Obergrafendorf (AT)
(72) Erfinder: POSCH, Leopold, 3200 Obergrafendorf (AT)
(74) Vertreter: Rosenich, Paul
(86) Internationale Anmeldenummer: EP9403138
(87) Internationale Veröffentlichungsnummer: WO9508255

(56) Entgegenhaltungen:
- DE-A- 2 930 042
- FR-A- 2 499 394
- GB-A- 1 240 277
- US-A- 2 814 924
- US-A- 3 706 189
- US-A- 4 087 955
- US-A- 4 118 917
- US-A- 4 974 403

## Beschreibung

Die Erfindung betrifft einen Rasentrimmer nach dem Oberbegriff des Anspruches 1. Herkömmliche Rasentrimmer (andere übliche Bezeichnungen: Freischneider oder Motorsense) verfügen über einen Antriebsmotor und ein Schneidmesser oder einen Schneidfaden. Der Antriebsmotor wird an einem Gestänge gehalten, das durch eine Bedienperson getragen wird. Die Bedienperson lenkt das rotierende Schneidmesser bzw. den Schneidfaden an jenen Stellen, an denen das Gras geschnitten werden soll. Das Schneidmesser bzw. der Faden rotiert dabei in Betriebsstellung in einer Ebene, die parallel zum Erdboden oder - in Fahrtrichtung - leicht nach vorn geneigt ist. Rasentrimmer haben zudem gelegentlich auch eine Gleitkurve, die eine Gleitfläche aufweist, über welche das Gewicht des Rasentrimmers am Boden abgestützt wird. Die Gleitkurve ist gegen die Fahrtrichtung gesehen hinter dem Schneidmesser. An ihr und oder an dem Gestänge ist zum Schutz von Bedienpersonen häufig ein halbzylinderrohrförmiges Schutzblech montiert, das in Fahrtrichtung offen ist. Dies deshalb, weil bei der üblichen Messer- bzw. Schneidfadenlagerung in den erwähnten Ebenen, parallel oder nach schräg vorn geneigt ein Erfassen von zu schneidendem Gras bisher nur durch diesen offenen Bereich möglich war. Der Nachteil bei derartigen Vorrichtungen mit dem nur teilweise vorhandenen Schutzblech ist, dass die abgeschnittenen Grasteile durch das rotierende Schneidmesser bzw. den rotierenden Schneidfaden weit nach vorn und seitlich verstreut werden. Dabei werden beim Schneid-betrieb ausserdem auch häufig Staub, Erdreich, Steinchen oder dergleichen aufgewirbelt und katapultartig nach vorn geschleudert. Ein weiterer grosser Nachteil ist, dass Sträucher und Baumrinden ebenso wie Mauerkanten usw. beschädigt werden können. Die US-A-2814924, welche die Merkmale des Oberbegriffs des Anspruchs 1 zeigt, beschreibt einen Rasentrimmer mit einem Schutzblech im Bereich des Messers. Ein saugartiges Mähen ist dabei nicht möglich.

Ebenso bekannt ist ein Aufbau gemäss US-3706189, der Leitbleche und ein Schutzblech im Messerbereich aufweist. Es handelt sich dabei um einen konventionellen Rasenmäher mit anschliessender Mulcheinrichtung für das abgetrennte Gras. Die Erfindung setzt sich die Aufgabe, das oben erwähnte Problem zu lösen und einen neuartigen Rasentrimmer zu schaffen. Gelöst wird es durch die Anwendung der Merkmale des Anspruches 1. Die Kombination des Abstützelements (Gleitfläche bzw. Räder oder Transportrollen) mit einem rund um die Schneideinrichtung geschlossenen Gehäuse und einer nach vorn oben - oder gegebenenfalls seitlich oben - schräg gestellten Eintrittsöffnung erlaubt sowohl das Eindringen von abzuschneidendem Gras in den Schneidbereich der Schneideinrichtung, als auch das Schneiden des Grases, ohne dieses über eine grosse Fläche zu verstreuen, zumal der grösste Teil des durch die Schneideinrichtung verschleuderten Materials an der Innenseite des Gehäuses abgefangen wird.

Die bevorzugte Ausbildung gemäss Anspruch 2 bewirkt ausserdem einen Saugeffekt und einen gezielten Abtrag des geschnittenen Grases, wobei durch den Saugeffekt insbesondere auch Grashalme erfasst und abgeschnitten werden können, die nicht unmittelbar unter der Eintrittsöffnung liegen. Vorteilhafterweise kann der Saugeffekt auch zum Absaugen von Laub o.dgl. eingesetzt werden. Hinsichtlich sicherheitstechnischer Anforderungen ist diese Variante der erstbeschriebenen Ausbildung aber noch überlegen, da bedingt durch die Saugwirkung der rotierenden Messer die Eintrittsöffnung an den Erdboden gesaugt wird und ein Zugriff zu den Messern dadurch vermieden ist, sobald die Bedienperson das Gestänge loslässt. Gegen ein willkürliches Schräglegen des Rasentrimmers könnte auch eine weitere Sicherheitseinrichtung, z.B. auch ein Neigungsschalter, vorgesehen sein.

Die bevorzugte Ausgestaltung gemäss Anspruch 3 erleichtert das Einsammeln abgeschnittener Grashalme, da dies gewissermassen selbsttätig wie bei einem Staubsauger funktioniert.

Weitere Merkmale der Erfindung ergeben sich aus den weiteren abhängigen Patentansprüchen bzw. aus der Figurenbeschreibung. Für besondere Anwendungsfälle könnte auf das Gehäuse und den Grasfangsack gegebenenfalls auch verzichtet werden, so dass dann als einzig neues und erfinderisches Merkmal eine Gleitfläche mit dem Gestänge verbunden ist, die das Schneidmesser oder Schneidfaden in einem geeigneten Abstand vom Boden und mit deren Schneidebene in einem bestimmten Winkel zum Boden hält. Gegebenenfalls könnte eine erfindungsgemäss vorgesehene Gleitfläche auch mit einem oder mehreren Rädern versehen bzw. ersetzt werden, um den Gleitwiderstand zu reduzieren. Die Ebene, welche durch die Aufsteilpunkte der Räder am Boden gent, entspricht der Abstützebene des Abstutzelementes und damit der Gleitfläche. Bei nur einem Rad ist dies im Wesentlichen eine Ebene, parallel zum Boden, wenn sich der Rasentrimmer in Betriebsstellung befindet.

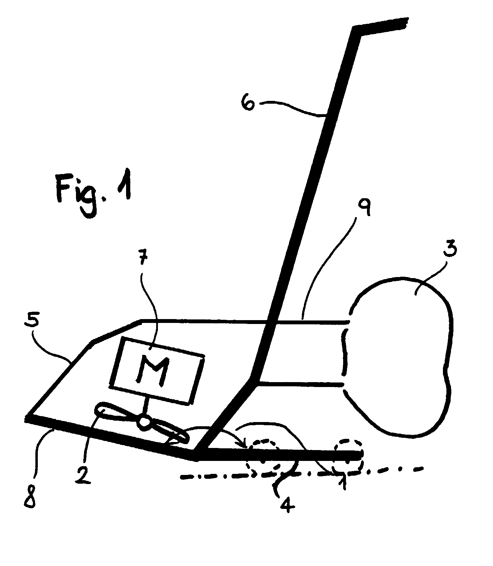

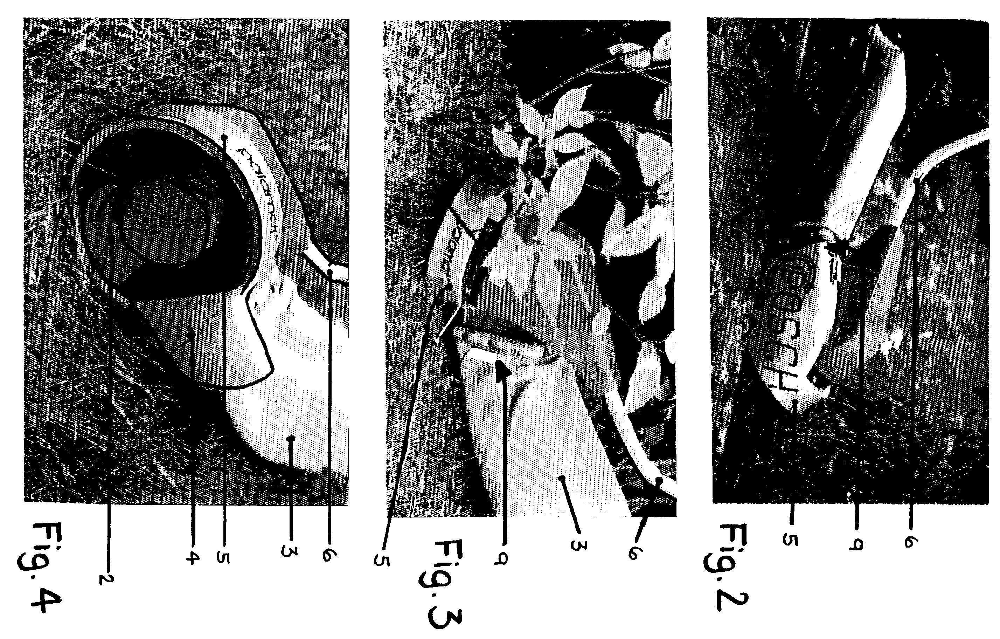

Anhand eines Ausführungsbeispieles wird die Erfindung näher erläutert: Dabei zeigen
- Fig.1: ein Schema der Erfindung,
- Fig.2 und 3: eine Ansicht in Gebrauchsstellung auf einer Wiese und
- Fig.4: einen umgedrehten Rasentrimmer mit Sicht auf die Gleitfläche und das Schneidblatt.

Die Figuren werden zusammenhängend beschrieben. Eine Gleitfläche (4) ist mit einem Gehäuse (5) und mit einem Gestänge (6) verbunden. Das Gehäuse (5) umschliesst ein propellerförmig ausgebildetes Schneidmesser (2), das von einem Motor (7) antreibbar ist. Das Gehäuse (5) verfügt über eine Eintrittsöffnung (8), die in einer Ebene liegt, welche mit der Gleitfläche (4) (gegebenenfalls mit der oben beschriebenen Ebene durch die Aufstellpunkte der Räder) einen Winkel (1) einschliesst, der kleiner als 180° ist.

Gegenüber der Eintrittsöffnung (8) befindet sich eine Austrittsöffnung (9), an der ein Grasfangsack (3) angeschlossen ist. Die Drehrichtung des Propellers (2) ist so gewählt, dass ein Saugluftstrom durch die Eintrittsöffnung (8) in den Sack (3) gerichtet ist. Bei Bedarf und für besondere Anwendungszwecke - z.B. für das Wegblasen von Laub oder dergleichen - kann der Motor (7) auch umschaltbar sein, so dass ein Blasluftstrom aus der Eintrittsöffnung (8) auf den Boden gerichtet werden kann.

## Patentansprüche

1. Rasentrimmer mit einem Antriebsmotor (7), einer damit verbundenen Schneideinrichtung (2) und einem, mit dem Motor (7) verbundenen, Führungs-Gestänge (6), wobei im Bereich der Schneideinrichtung (2) ein Gehäuse (5) vorgesehen ist und mit einem Abstützelement verbunden ist, wobei das Gestänge (6) schwenkfrei mit dem Gehäuse (5) verbunden ist, **dadurch gekennzeichnet,** dass das Gehäuse (5) eine rund um die Schneideinrichtung geschlossene Eintrittsöffnung (8) bildet, dass die Eintrittsöffnung (8) bzw. das sie bildende Gehäuse (5) - im Betriebszustand und in Fahrtrichtung gesehen - lediglich im Bereich hinter der Eintrittsöffnung (8) gegenüber dem Erdboden durch das Abstützelement abgestützt ist, wobei das Abstützelement durch eine Gleitfläche oder durch Rädern oder Rollen gebildet ist, und dass die Eintrittsöffnung (8) gegenüber dem Abstützelement so ausgebildet ist, daß sie im Betriebszustand in einer Ebene liegt, die in Fahrtrichtung schräg nach oben oder schräg nach seitlich oben zeigt und mit dem Erdboden unter dem Abstützelement einen Winkel (1) von kleiner als 180° einschliesst.

2. Rasentrimmer nach Anspruch 1, **dadurch gekennzeichnet, dass** die Schneideinrichtung als propellerförmiges Schneidmesser (2) ausgebildet ist.

3. Rasentrimmer nach Anspruch 1 oder 2, **dadurch gekennzeichnet, dass** gegenüber der Eintrittsöffnung (8) eine Austrittsöffnung (9) vorgesehen ist, an der ein Grasfangsack (3) angeschlossen bzw. anschliessbar ist.

4. Rasentrimmer nach einem der vorhergehenden Ansprüche, **dadurch gekennzeichnet,** dass die Gleitfläche (4) in Gebrauchsstellung in Richtung Erdboden bombiert ist.

5. Rasentrimmer nach einem der vorhergehenden Ansprüche, **dadurch gekennzeichnet, dass** an der Gleitfläche (4) wenigstens ein Rad oder wenigstens eine Transportrolle befestigt ist.

6. Rasentrimmer nach einem der vorhergehenden Ansprüche, **dadurch gekennzeichnet, dass** der Antriebsmotor (7) im Bereich der Schneideinrichtung bzw. des propellerförmigen Schneidmessers (2) angeordnet ist.

7. Rasentrimmer nach Anspruch 6, **dadurch gekennzeichnet, dass** die Schneideinrichtung bzw. das propellerförmige Schneidmesser (2) so ausgebildet ist, dass es den Antriebsmotor (7) wenigstens teilweise umschliesst.

8. Rasentrimmer nach einem der vorhergehenden Ansprüche, **dadurch gekennzeichnet, dass** die Schneideinrichtung (2) vom Antriebsmotor (7) räumlich getrennt und mit diesem über eine Welle o.dgl. verbunden ist.

## Claims

1. Strimmer having a drive motor (7), a cutting means (2) connected thereto and a steering rod system (6) connected to the motor (7), a housing (5) being provided in the region of the cutting mans (2) and being connected to a support element, and the rod system (6) being nonrotatably connected to the housing (5), characterized in that the housing (5) forms an inlet orifice (8) closed all around the cutting means, that the inlet orifice (8) or the housing (5) forming it - viewed in the operating state and in the direction of travel - is supported on the ground by the support element only in the region behind the inlet orifice (8), the support element being formed by a sliding surface or by wheels or rollers, and that the inlet orifice (8) is formed relative to the support element in such a way that, in the operating state it lies in a plane which, in the direction of travel, is inclined obliquely upwards or obliquely to the side and makes an angle (1) of less than 180° with the ground under the support element.

2. Strimmer according to Claim 1, characterized in that the cutting means is in the form of a propeller-shaped blade (2).

3. Strimmer according to Claim 1 or 2, characterized in that an outlet orifice (9) to which a grass-collecting bag (3) is connected or can be connected is provided opposite the inlet orifice (8).

4. Strimmer according to any of the preceding Claims, characterized in that, in the operating position, the sliding surface (4) is dished in the direction of the ground.

5. Strimmer according to any of the preceding Claims, characterized in that at least one wheel or at least one driving roller is fastened to the sliding surface (4).

6. Strimmer according to any of the preceding Claims, characterized in that the drive motor (7) is arranged in the region of the cutting means or of the propeller-shaped blade (2).

7. Strimmer according to Claim 6, characterized in that the cutting means or the propeller-shaped blade (2) is formed in such a way that it at least partially encloses the drive motor (7).

8. Strimmer according to any of the preceding Claims, characterized in that the cutting means (2) is spatially separated from the drive motor (7) and is connected to said motor by means of a shaft or the like.

## Revendications

1. Tondeuse à gazon avec un moteur d'entraînement (7), un dispositif de coupes (2) relié à celui-ci et une tringle de guidage (6) reliée au moteur (7), un carter (5) étant prévu dans la zone du dispositif de coupe (2) et étant relié à un élément de support, la tringle (6) étant reliée au carter (5) sans pivotement, caractérisée en ce que le carter (5) forme une ouverture d'entrée (8) fermée tout autour du dispositif de coupe, en ce que l'ouverture d'entrée (8) ou le carter (5) qui la forme est soutenu, vu dans l'état de service et dans le sens de marche, par l'élément de soutien uniquement dans la zone située derrière l'ouverture d'entrée (8) par rapport au sol, l'élément de soutien étant formé par une surface de glissement ou par des roues ou des roulettes, et en ce que l'ouverture d'entrée (8) est réalisée par rapport à l'élément de soutien de telle façon qu'elle se situe dans l'état de service dans un plan qui est dirigé dans le sens de marche de façon inclinée vers le haut ou de façon inclinée vers le côté en haut et forme avec le sol sous l'élément de soutien un angle (1) de moins de 180°.

2. Tondeuse à gazon selon la revendication 1, caractérisée en ce que le dispositif de coupe se présente sous la forme d'un couteau (2) en forme d'hélice.

3. Tondeuse à gazon selon la revendication 1 ou 2, caractérisée en ce qu'il est prévu en face de l'orifice d'entrée (8) un orifice de sortie (9), auquel un sac collecteur d'herbe (3) est raccordé ou peut être raccordé.

4. Tondeuse à gazon selon l'une quelconque des revendications précédentes, caractérisée en ce que la surface de glissement (4) est bombée dans la position d'utilisation en direction du sol.

5. Tondeuse à gazon selon l'une quelconque des revendications précédentes, caractérisée en ce qu'au moins une roue ou au moins un galet de transport est fixé sur la surface de glissement (4).

6. Tondeuse à gazon selon l'une quelconque de revendications précédentes, caractérisée en ce que le moteur d'entraînement (7) est disposé dans la zone du dispositif de coupe ou de la lame (2) en forme d'hélice.

7. Tondeuse à gazon selon la revendication 6, caractérisée en ce que le dispositif de coupe ou la lame en forme d'hélice (2) est conçu de façon à envelopper au moins partiellement le moteur d'entraînement (7).

8. Tondeuse à gazon selon l'une quelconque des revendications précédentes, caractérisée en ce que le dispositif de coupe (2) est séparé dans l'espace du moteur d'entraînement (7) et est relié à celui-ci par un arbre ou similaire.
